# EUROPEAN PATENT SPECIFICATION

(11) **EP 4 145 932 B1**
(45) Date of publication and mention of the grant of the patent: **25.02.2026**
(21) Application number: 21803002.1
(22) Date of filing: 12.05.2021
(51) Int. Cl.: H04W 88/08, H04W 16/26

(54) **DATA TRANSMISSION METHOD AND RELATED DEVICE**
DATENÜBERTRAGUNGSVERFAHREN UND ZUGEHÖRIGE VORRICHTUNG
PROCÉDÉ DE TRANSMISSION DE DONNÉES ET DISPOSITIF ASSOCIÉ

(30) Priority: 13.05.2020 CN 202010401830
(43) Date of publication of application: 08.03.2023
(73) Proprietor: Huawei Technologies Co., Ltd., Shenzhen, Guangdong 518129 (CN)
(72) Inventor: QIN, Mingfu, Shenzhen, Guangdong 518129 (CN)
(74) Representative: Maiwald GmbH
(86) International application number: PCT/CN2021/093286
(87) International publication number: WO 2021/228127

(56) References cited:
- EP-A1- 3 758 418
- WO-A1-2019/163645
- CN-A- 110 831 187
- CN-A- 111 148 123
- CN-A- 111 225 412
- US-A1- 2013 100 869
- US-A1- 2013 142 136
- US-A1- 2019 342 904

## Description

### TECHNICAL FIELD

Embodiments of this application relate to the communications field, and in particular, to data transmission at a backhaul device.

### BACKGROUND

A conventional wireless base station performs carrying on a transmission link in a wired transmission manner (by using a cable or an optical fiber). With an increasing quantity of deployed wireless base stations, transmission is constructed in a wireless backhaul manner in an area in which wired transmission cannot be constructed and an area having no construction condition.

Currently, a donor node configures a first frequency as traffic carrying frequencies of a wireless backhaul module (remote relay node, RRN) and a terminal device. A base transceiver station (base transceiver station, BTS) establishes a backhaul link between the RRN and the donor node. The BTS configures a second frequency as a traffic carrying frequency of the terminal device. The terminal device establishes an access link with the BTS by using the second frequency. On a station, an RRN implements backhaul, and a BTS implements access. The RRN and the BTS constitute an RRN backhaul station. CN 110 831 187 A describes a resource configuration method and device, and relates to the technical field of communications, for relay equipment to determine resources communicated with a third node according to scheduling configuration information sent by a superior node, so as to avoid waste caused by reserving PDCCH resources for the access link of the first node in all backhaul link time slots orsubframes, or avoid conflict between transmission of the backhaul link and transmission resources for receiving uplink signals on the access link. WO 2019/163645 A1 describes that the base station device transmits a notification signal including information indicating whether or not the base station device is using a wireless resource for a backhaul line. A terminal device receives, from the base station device, the notification signal including the information indicating whether or not the base station device is using the wireless resource for the backhaul line, and on the basis of the information, determines whether or not to request connection from the base station device. US 2019/342904 A1 describes devices for wireless communications are described that provide for system information (SI) for access and backhaul. US 2013/100869 A1 describes wireless mesh network communication apparatus and methods.

In an existing implementation, a hardware structure of the RRN is similar to a hardware structure of the BTS, causing a waste of hardware costs.

### SUMMARY

Embodiments of this application provide data transmission at a backhaul device, to reduce hardware costs.

The invenion is set out in the claims.

A first aspect of the present invention provides a data transmission method, as defined in Claim 1.

A backhaul device is a device that can implement both backhaul and access, and a hardware structure of the backhaul device is similar to a hardware structure of an RRN or a BTS. When a donor node transmits downlink data to a terminal device, the backhaul device serves as a rely device to receive the downlink data from the donor node and send the downlink data to the terminal device.

The RRN and the BTS of similar hardware structures are replaced with one backhaul device, thereby reducing hardware costs.

According to the first aspect of the present invention, the backhaul device includes a backhaul module and an access module. A function of the backhaul module is similar to a function of the RRN, and a function of the BTS is similar to a function of the access module. The backhaul module receives the downlink data from the donor node and sends the downlink data to the access module. The access module sends the downlink data to the terminal device. A data transmission channel between the backhaul module and the access module may be an internal high-speed transmission channel of the backhaul device.

In an example, in a time division duplex (time division duplex, TDD) standard, beamforming may be used to implement a requirement that beams of two functions point to different directions. The backhaul module receives the downlink data from the donor node by using a backhaul beam, and the access module sends the downlink data to the terminal device by using a traffic beam. The backhaul beam and the traffic beam are non-overlapping beams.

In this example, a method for implementing the functions of the RRN and the BTS by using one backhaul device and different beams in the time division duplex standard is provided.

According to the first aspect of the present invention, the backhaul device includes a baseband, an intermediate radio frequency, and an antenna. The access module and the backhaul module of the backhaul device share the baseband, the intermediate radio frequency, and the antenna.

A second aspect of the present invention provides a data transmission method, as defined in Claim 3.

A backhaul device is a device that can implement both backhaul and access, and a hardware structure of the backhaul device is similar to a hardware structure of an RRN or a BTS. When a terminal device transmits uplink data to a donor node, the backhaul device serves as a rely device to receive the uplink data from the terminal device and send the uplink data to the donor node.

The RRN and the BTS of similar hardware structures are replaced with one backhaul device, thereby reducing hardware costs.

According to the second aspect of the present invention, the backhaul device includes a backhaul module and an access module. A function of the backhaul module is similar to a function of the RRN, and a function of the BTS is similar to a function of the access module. The access module receives the uplink data from the terminal device and sends the uplink data to the backhaul module. The backhaul module sends the uplink data to the donor device. A data transmission channel between the backhaul module and the access module may be an internal high-speed transmission channel of the backhaul device.

In an example, in a time division duplex (time division duplex, TDD) standard, beamforming may be used to implement a requirement that beams of two functions point to different directions. The access module receives the uplink data from the terminal device by using a traffic beam, and the backhaul module sends the uplink data to the donor device by using a backhaul beam. The traffic beam and the backhaul beam are non-overlapping beams.

In this example, a method for implementing the functions of the RRN and the BTS by using one backhaul device and different beams in the time division duplex standard is provided.

According to the second aspect of the present invention, the backhaul device includes a baseband, an intermediate radio frequency, and an antenna. The access module and the backhaul module of the backhaul device share the baseband, the intermediate radio frequency, and the antenna.

A third aspect of the present invention provides a backhaul device, as defined in Claim 5. The device has a function of implementing the methods in the first aspect and the implementations of the first aspect.

The device has a function of implementing the methods in the second aspect and the implementations of the second aspect.

A fourth aspect of the present invention provides a computer storage medium, as defined in Claim 6. The computer storage medium stores instructions. When the instructions are executed on a computer associated with a backhaul device, the backhaul device is configured to perform the methods in the first aspect and the implementations of the first aspect or the methods in the second aspect and the implementations of the second aspect.

A fifth aspect of embodiments of this application provides a computer program, as defined in Claim 7. When the computer program is executed on a computer associated with a backhaul device, the backhaul device is configured to perform the methods in the first aspect and the implementations of the first aspect or the methods in the second aspect and the implementations of the second aspect.

### BRIEF DESCRIPTION OF DRAWINGS

FIG. 1 is a schematic diagram of a network framework according to an embodiment of this application;
FIG. 2 is a schematic flowchart of a data transmission method according to an embodiment of this application;
FIG. 3 is a schematic diagram of a beam direction implementation according to an embodiment of this application;
FIG. 4 is a schematic diagram of a downlink data transmission method according to an embodiment of this application;
FIG. 5 is a schematic diagram of a structure of a backhaul device according to an embodiment of this application; and
FIG. 6 is a schematic diagram of another structure of a backhaul device according to an embodiment of this application.

### DESCRIPTION OF EMBODIMENTS

Embodiments of this application provide a data transmission at a backhaul device, to reduce hardware costs.

Technical solutions provided in embodiments of this application may be applied to various communications systems, such as a long term evolution (long term evolution, LTE) system, a 5th generation (5th generation, 5G) mobile communications system, a wireless fidelity (wireless-fidelity, WiFi) system, a future communications system, or a system in which a plurality of communications systems are fused. This is not limited in embodiments of this application. 5G may also be referred to as new radio (new radio, NR).

The technical solutions provided in embodiments of this application may be applied to various communications scenarios, for example, may be applied to one or more of the following communications scenarios: enhanced mobile broadband (enhanced mobile broadband, eMBB), ultra-reliable low-latency communication (ultra-reliable low-latency communication, URLLC), machine type communication (machine type communication, MTC), massive machine type communications (massive machine type communications, mMTC), device-to-device (D2D), vehicle-to-everything (vehicle to everything, V2X), vehicle to vehicle (vehicle to vehicle, V2V), the internet of things (internet of things, IoT), and the like.

The technical solutions provided in embodiments of this application may be applied to communication between communications devices. The communication between communications devices may include communication between a network device and a terminal device, communication between network devices, and/or communication between terminal devices. In embodiments of this application, the term "communication" may also be described as "transmission", "information transmission", "signal transmission", or the like. The transmission may include sending and/or receiving. In embodiments of this application, communication between a network device and a terminal device is used as an example to describe the technical solutions. Persons skilled in the art may alternatively use the technical solutions to perform communication between another scheduling entity and another subordinate entity, for example, communication between a macro base station and a micro base station, or for example, communication between a first terminal device and a second terminal device. The scheduling entity may allocate an air interface resource to the subordinate entity. The air interface resource includes one or more of the following resources: a time domain resource, a frequency domain resource, a code resource, and a space resource. In embodiments of this application, "a plurality of" may be two, three, four, or more. This is not limited in embodiments of this application.

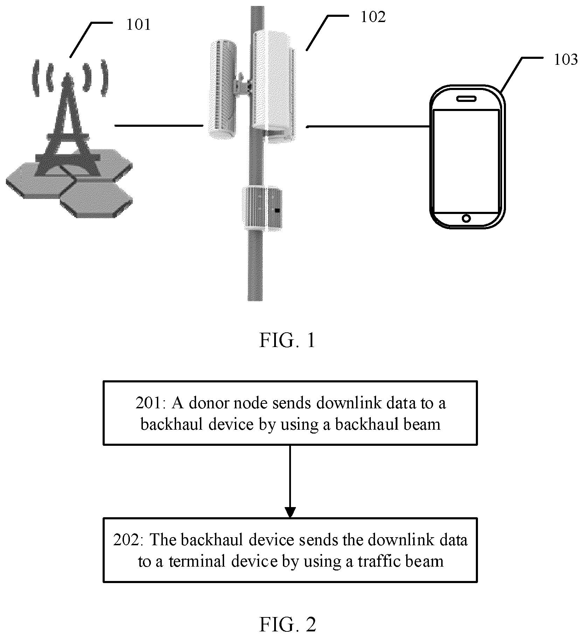

Referring to FIG. 1, a network structure framework in an embodiment of this application includes:
a donor node 101, a backhaul device 102, and a terminal device 103.

The backhaul device 102 has functions of an RRN and a BTS, so that data transmission between the donor node and the terminal device in wireless backhaul is implemented by using one device.

The donor node 101 in this embodiment of this application includes a base station (base station, BS), and may be a device that is deployed in a radio access network and that can wirelessly communicate with a terminal device. The base station may have multiple forms, such as a macro base station, a micro base station, a relay station, and an access point. The base station in this embodiment of this application may be a base station in a 5G system or a base station in an LTE system. The base station in the 5G system may also be referred to as a transmission reception point (transmission reception point, TRP) or a next generation NodeB (generation Node B, gNB or gNodeB). In this embodiment of this application, an apparatus configured to implement a function of the donor node 101 may be the donor node 101, or may be an apparatus that can support the donor node 101 in implementing the function, such as a chip system, where the apparatus may be installed in the donor node 101 or used in matching with the donor node 101. In the technical solution provided in this embodiment of this application, the technical solution provided in this embodiment of this application is described by using an example in which the apparatus configured to implement the function of the donor node 101 is the donor node 101.

The terminal device 103 is also referred to as user equipment (user equipment, UE), a mobile station (mobile station, MS), a mobile terminal (mobile terminal, MT), or the like, and is a device that provides voice and/or data connectivity for a user, such as a handheld device or a vehicle-mounted device having a wireless connection function. Currently, some terminal examples are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like.

In this embodiment of this application, an apparatus configured to implement a function of the terminal device may be the terminal device, or may be an apparatus that can support the terminal device in implementing the function, such as a chip system, where the apparatus may be installed in the terminal device or used in matching with the terminal device. In this embodiment of this application, the chip system may include a chip, or may include a chip and another discrete component. In the technical solution provided in this embodiment of this application, the technical solution provided in this embodiment of this application is described by using an example in which the apparatus configured to implement the function of the terminal device is the terminal device.

Data transmission between the donor node and the terminal device includes: the donor node transmits downlink data to the terminal device, and the terminal device transmits uplink data to the donor node. With reference to a schematic diagram of the network framework in FIG. 1, referring to FIG. 2, the following describes in detail a process of data transmission between the donor node and the terminal device by using an example in which the donor node transmits downlink data to the terminal device.

201: The donor node sends downlink data to a backhaul device by using a backhaul beam.

The backhaul device includes a backhaul module and an access module, the backhaul module and the access module share one hardware device, and a backhaul function of the backhaul module and an access function of the access module are implemented by using different beam directions. The donor node sends the downlink data to the backhaul module of the backhaul device by using the backhaul beam.

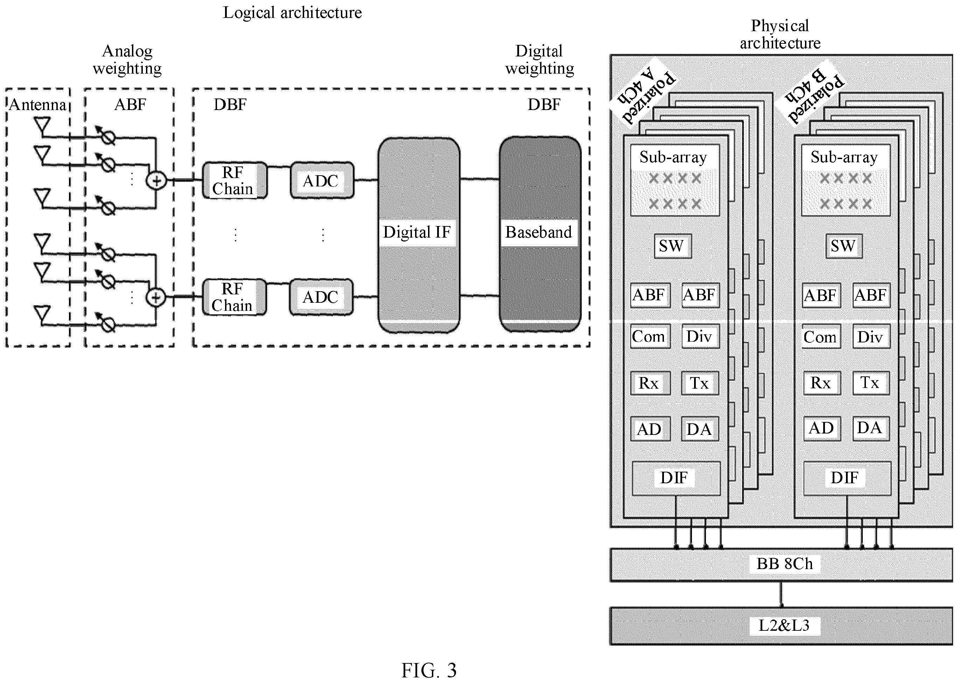

Referring to FIG. 3, because access and backhaul are in two different coverage directions, but an RRN backhaul beam and an access traffic beam share an antenna array, different directions of access and backhaul may be implemented through digital-analog hybrid beamforming. Eight channels are used as an example. A baseband digital channel and a radio frequency channel are in a one-to-one correspondence. Each digital domain channel of a baseband is multiplied by a weighted amplitude phase, and a beam radiated from an antenna array corresponding to each channel is converted, to implement different beam directions.

202: The backhaul device sends the downlink data to the terminal device by using a traffic beam.

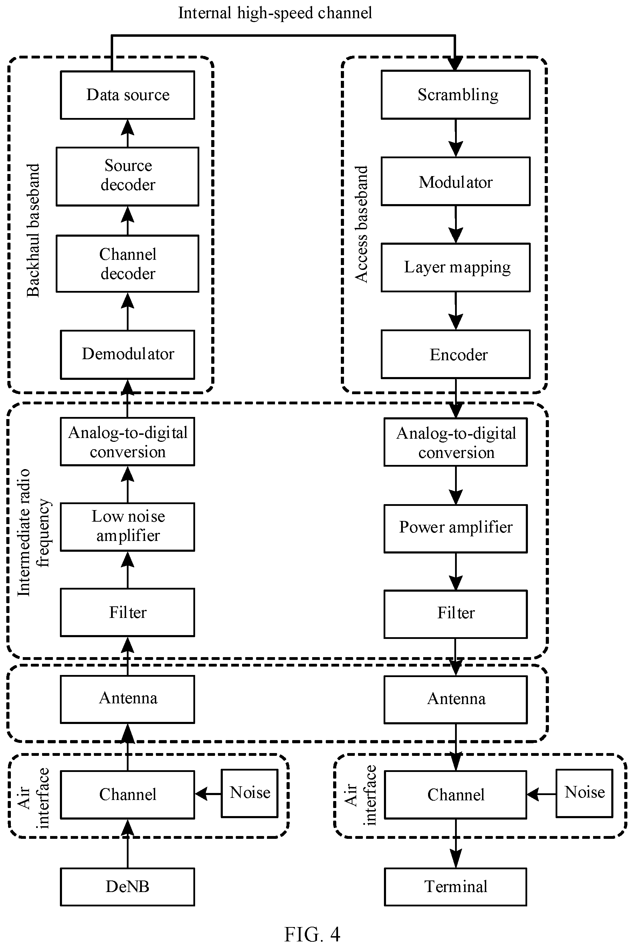

Referring to FIG. 4, after receiving the downlink data, the backhaul module of the backhaul device may send the downlink data to the access module through an internal high-speed channel of the backhaul device, and the access module of the backhaul device sends the downlink data to the terminal device by using the traffic beam.

The access module and the backhaul module of the backhaul device share one antenna, intermediate radio frequency, and baseband. When the terminal device transmits uplink data to the donor node, the access module receives the uplink data from the terminal device and sends the uplink data to the backhaul module, and the backhaul module sends the uplink data to the donor device. This is similar to a downlink process. Details are not described herein.

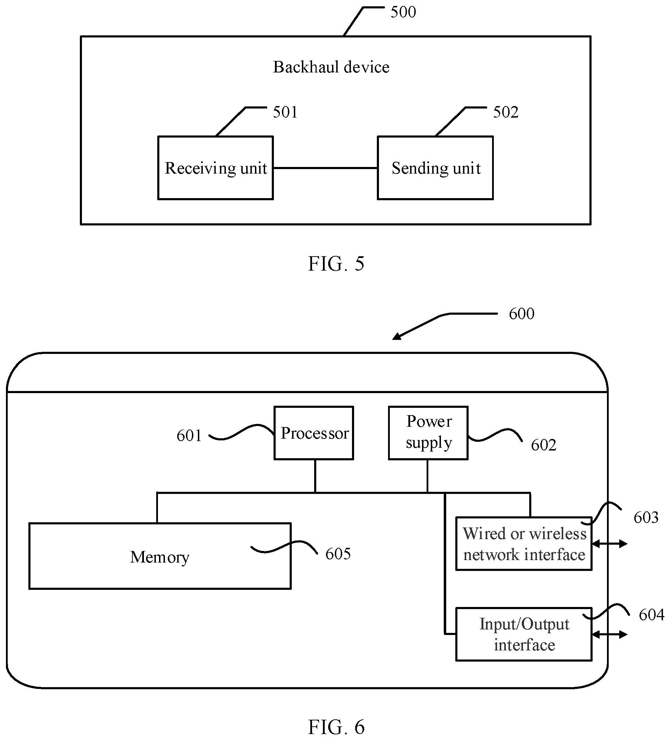

The foregoing describes the data transmission method in embodiments of this application. The following describes an apparatus in embodiments of this application. Referring to FIG. 5, an embodiment of a backhaul device 500 in embodiments of this application includes:
a receiving unit 501, configured to receive downlink data from a donor node; and
a sending unit 502, configured to send the downlink data to a terminal device.

Another embodiment of a backhaul device 500 in embodiments of this application includes:
a receiving unit 501, configured to receive uplink data from a terminal device; and
a sending unit 502, configured to send the uplink data to a donor device.

Referring to FIG. 6, an embodiment of this application provides a backhaul device 600. The backhaul device may serve as a first node. The backhaul device 600 may include one or more processors 601 and a memory 605. The memory 605 stores program code. Further, the memory 605 may store data.

The memory 605 may be a volatile memory, a nonvolatile memory, or a persistent memory. The program code stored in the memory 605 may include one or more modules. Each module may include a series of instruction operations for the backhaul device. Further, the processor 601 may be disposed to communicate with the memory 605, to perform a series of instruction operations in the memory 605 in the backhaul device 600.

The backhaul device 600 may further include one or more power supplies 602, one or more wired or wireless network interfaces 603, one or more input/output interfaces 604, and/or one or more operating systems, for example, any one of Windows (Windows), Android (Android), Mac OS (Mac OS), Unix (Unix), and Linux (Linux).

The processor 601 may perform the operations performed by the first node in the foregoing embodiment shown in FIG. 2. Details are not described herein again.

This application provides a backhaul device. The backhaul device is coupled to a memory, and is configured to read and execute instructions stored in the memory, to enable the backhaul device to implement the steps of the foregoing method performed by the backhaul device in FIG. 2. In a possible design, the port detection apparatus is a chip or a system-on-a-chip.

This application provides a chip system. The chip system includes a processor, configured to support a backhaul device in implementing the function in the foregoing embodiment, for example, sending or processing the data and/or information in the foregoing method. In a possible design, the chip system further includes a memory. The memory is configured to store necessary program instructions and data. The chip system may include a chip, or may include a chip and another discrete device.

In another possible design, when the chip system is a chip inside the backhaul device, the chip includes a processing unit and a communications unit. The processing unit may be, for example, a processor, and the communications unit may be, for example, an input/output interface, a pin, or a circuit. The processing unit may execute computer executable instructions stored in a storage unit, to enable the chip inside the backhaul device to perform the steps of the foregoing method performed by the backhaul device in FIG. 2. Optionally, the storage unit is a storage unit inside the chip, such as a register or a buffer, or the storage unit may be a storage unit that is outside the chip and that is inside a terminal device, a base station, or the like, such as a read-only memory (read-only memory, ROM) or another type of static storage device that can store static information and instructions, or a random access memory (random access memory, RAM).

An embodiment of this application further provides a processor, configured to be coupled to a memory, and configured to perform the method and the function that are related to the backhaul device in any one of the foregoing embodiments.

An embodiment of this application further provides a computer-readable storage medium. The computer-readable storage medium stores a computer program. When the computer program is executed by a computer, a method procedure related to the backhaul device in any one of the foregoing method embodiments is implemented. Correspondingly, the computer may be the foregoing backhaul device.

It should be understood that, the processor mentioned in the backhaul device, the chip system, or the like in embodiments of this application, or the processor provided in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that, in this application, there may be one or more processors in the backhaul device, the chip system, or the like in the foregoing embodiments, and a quantity of processors may be adjusted based on an actual application scenario. This is merely an example description and is not limited herein. There may be one or more memories in embodiments of this application, and a quantity of memories may be adjusted based on an actual application scenario. This is merely an example description and is not limited herein.

It should be further understood that, the memory, the readable storage medium, or the like in the backhaul device, the chip system, or the like in the foregoing embodiments of embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be further noted that when the backhaul device includes a processor (or a processing unit) and a memory, the processor in this application may be integrated with the memory, or the processor may be connected to the memory by using an interface. This may be adjusted based on an actual application scenario and is not limited.

An embodiment of this application further provides a computer program or a computer program product including a computer program. When the computer program is executed on a computer, the computer is enabled to implement a method procedure related to the backhaul device in any one of the foregoing method embodiments. Correspondingly, the computer may be the foregoing backhaul device.

All or some of the foregoing embodiments shown in FIG. 2 may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that the computer can store, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

It may be clearly understood by persons skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the method described in the embodiment shown in FIG. 2 in this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

Names of messages/frames/information, modules, units, or the like provided in embodiments of this application are only examples, and other names may be used provided that functions of the messages/frames/information, the modules, the units, or the like are the same.

The terms used in embodiments of this application are merely for the purpose of illustrating specific embodiments, and are not intended to limit the present invention. It should be further understood that, in the description of this application, unless otherwise stated, "/" represents an "or" relationship between associated objects. For example, A/B may represent A or B. In this application, "and/or" is merely used to describe an association relationship between associated objects, and indicates that three relationships may exist. For example, A and/or B may indicate the following three cases: only A exists, both A and B exist, and only B exists, where A and B may be singular or plural.

Depending on the context, for example, words "if" used herein may be explained as "while" or "when" or "in response to determining" or "in response to detection". Similarly, depending on the context, phrases "if determining" or "if detecting (a stated condition or event)" may be explained as "when determining" or "in response to determining" or "when detecting (the stated condition or event)" or "in response to detecting (the stated condition or event)".

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of invention, as defined by the appended claims.

## Claims

1. A data transmission method applied to a backhaul device, wherein the backhaul device comprises a backhaul module and an access module, the method comprising:
receiving (201), by the backhaul module of the backhaul device, downlink data from a donor node; and
sending (202), by the access module of the backhaul device, the downlink data to a terminal device,
wherein the backhaul device comprises a baseband, an intermediate radio frequency, and an antenna; and
the access module and the backhaul module share the baseband, the intermediate radio frequency, and the antenna.

2. The method according to claim 1, wherein
the receiving, by the backhaul module, the downlink data from the donor node comprises:
receiving, by the backhaul module, the downlink data from the donor node by using a backhaul beam; and
the sending, by the access module, the downlink data to the terminal device comprises:
sending, by the access module, the downlink data to the terminal device by using a traffic beam, wherein the backhaul beam and the traffic beam are non-overlapping beams.

3. A data transmission method applied to a backhaul device, wherein the backhaul device comprises a backhaul module and an access module, the method comprising:
receiving, by the access module of the backhaul device, uplink data from a terminal device; and
sending, by the backhaul module of the backhaul device, the uplink data to a donor device,
wherein the backhaul device comprises a baseband, an intermediate radio frequency, and an antenna; and
the access module and the backhaul module share the baseband, the intermediate radio frequency, and the antenna.

4. The method according to claim 3, wherein
the receiving, by the access module, the uplink data from the terminal device comprises:
receiving, by the access module, the uplink data from the terminal device by using a traffic beam; and
the sending, by the backhaul module, the uplink data to the donor device comprises:
sending, by the backhaul module, the uplink data to the donor device by using a backhaul beam, wherein the traffic beam and the backhaul beam are non-overlapping beams.

5. A backhaul device (500), comprising means configured to perform the steps of the method according to any one of claims 1 to 4.

6. A computer storage medium, wherein the computer storage medium stores instructions, and when the instructions are executed on a computer associated with a backhaul device, the backhaul device is configured to perform the method according to any one of claims 1 to 4.

7. A computer program, wherein when the computer program is executed on a computer associated with a backhaul device, the backhaul device is configured to perform the method according to any one of claims 1 to 4.

## Patentansprüche

1. Datenübertragungsverfahren, das auf eine Backhaul-Vorrichtung angewendet wird, wobei die Backhaul-Vorrichtung ein Backhaul-Modul und ein Zugriffsmodul umfasst, wobei das Verfahren umfasst:
Empfangen (201) von Downlink-Daten von einem Geberknoten durch das Backhaul-Modul der Backhaul-Vorrichtung; und
Senden (202) der Downlink-Daten durch das Zugriffsmodul der Backhaul-Vorrichtung an eine Endgerätevorrichtung,
wobei die Backhaul-Vorrichtung ein Basisband, eine Zwischenfunkfrequenz und eine Antenne umfasst; und
das Zugriffsmodul und das Backhaul-Modul sich das Basisband, die Zwischenfunkfrequenz und die Antenne teilen.

2. Verfahren nach Anspruch 1, wobei
das Empfangen der Downlink-Daten von dem Geberknoten durch das Backhaul-Modul umfasst:
Empfangen der Downlink-Daten von dem Geberknoten durch das Backhaul-Modul unter Verwendung eines Backhaul-Strahls; und
das Senden der Downlink-Daten durch das Zugriffsmodul an die Endgerätevorrichtung umfasst:
Senden der Downlink-Daten durch das Zugriffsmodul an die Endgerätevorrichtung unter Verwendung eines Verkehrsstrahls, wobei der Backhaul-Strahl und der Verkehrsstrahl sich nicht überlappende Strahlen sind.

3. Datenübertragungsverfahren, das auf eine Backhaul-Vorrichtung angewendet wird, wobei die Backhaul-Vorrichtung ein Backhaul-Modul und ein Zugriffsmodul umfasst, wobei das Verfahren umfasst:
Empfangen von Uplink-Daten von einer Endgerätevorrichtung durch das Zugriffsmodul der Backhaul-Vorrichtung; und
Senden der Uplink-Daten durch das Backhaul-Modul der Backhaul-Vorrichtung an eine Gebervorrichtung,
wobei die Backhaul-Vorrichtung ein Basisband, eine Zwischenfunkfrequenz und eine Antenne umfasst; und
das Zugriffsmodul und das Backhaul-Modul sich das Basisband, die Zwischenfunkfrequenz und die Antenne teilen.

4. Verfahren nach Anspruch 3, wobei
das Empfangen der Uplink-Daten von der Endgerätevorrichtung durch das Zugriffsmodul umfasst:
Empfangen der Uplink-Daten von der Endgerätevorrichtung durch das Zugriffsmodul unter Verwendung eines Verkehrsstrahls; und
das Senden der Uplink-Daten durch das Backhaul-Modul an die Gebervorrichtung umfasst:
Senden der Uplink-Daten durch das Backhaul-Modul an die Gebervorrichtung unter Verwendung eines Backhaul-Strahls, wobei der Verkehrsstrahl und der Backhaul-Strahl sich nicht überlappende Strahlen sind.

5. Backhaul-Vorrichtung (500), umfassend Mittel, die zum Durchführen der Schritte des Verfahrens nach einem der Ansprüche 1 bis 4 konfiguriert sind.

6. Computerspeichermedium, wobei das Computerspeichermedium Anweisungen speichert und, wenn die Anweisungen auf einem Computer ausgeführt werden, der mit einer Backhaul-Vorrichtung verknüpft ist, die Backhaul-Vorrichtung dazu konfiguriert ist, das Verfahren nach einem der Ansprüche 1 bis 4 durchzuführen.

7. Computerprogramm, wobei, wenn das Computerprogramm auf einem Computer ausgeführt wird, der mit einer Backhaul-Vorrichtung verknüpft ist, die Backhaul-Vorrichtung dazu konfiguriert ist, das Verfahren nach einem der Ansprüche 1 bis 4 durchzuführen.

## Revendications

1. Procédé de transmission de données appliqué à un dispositif de liaison de retour, dans lequel le dispositif de liaison de retour comprend un module de liaison de retour et un module d'accès, le procédé comprenant :
la réception (201), par le module de liaison de retour du dispositif de liaison de retour, de données de liaison descendante provenant d'un nœud donneur ; et
l'envoi (202), par le module d'accès du dispositif de liaison de retour, des données de liaison descendante à un dispositif terminal,
dans lequel le dispositif de liaison de retour comprend une bande de base, une fréquence radio intermédiaire et une antenne ; et
le module d'accès et le module de liaison de retour partagent la bande de base, la fréquence radio intermédiaire et l'antenne.

2. Procédé selon la revendication 1, dans lequel
la réception, par le module de liaison de retour, des données de liaison descendante du nœud donneur comprend :
la réception, par le module de liaison de retour, des données de liaison descendante provenant du nœud donneur en utilisant un faisceau de liaison de retour ; et
l'envoi, par le module d'accès, des données de liaison descendante vers le dispositif terminal comprend :
l'envoi, par le module d'accès, des données de liaison descendante au dispositif terminal en utilisant un faisceau de trafic, dans lequel le faisceau de liaison de retour et le faisceau de trafic sont des faisceaux non superposés.

3. Procédé de transmission de données appliqué à un dispositif de liaison de retour, dans lequel le dispositif de liaison de retour comprend un module de liaison de retour et un module d'accès, le procédé comprenant :
la réception, par le module d'accès du dispositif de liaison de retour, de données de liaison montante provenant d'un dispositif terminal ; et
l'envoi, par le module de liaison de retour du dispositif de liaison de retour, des données de liaison montante à un dispositif donneur,
dans lequel le dispositif de liaison de retour comprend une bande de base, une fréquence radio intermédiaire et une antenne ; et
le module d'accès et le module de liaison de retour partagent la bande de base, la fréquence radio intermédiaire et l'antenne.

4. Procédé selon la revendication 3, dans lequel
la réception, par le module d'accès, des données de liaison montante provenant du dispositif terminal comprend :
la réception, par le module d'accès, des données de liaison montante provenant du dispositif terminal en utilisant un faisceau de trafic ; et
l'envoi, par le module de liaison de retour, des données de liaison montante au dispositif donneur comprend :
l'envoi, par le module de liaison de retour, des données de liaison montante au dispositif donneur en utilisant un faisceau de liaison de retour, dans lequel le faisceau de trafic et le faisceau de liaison de retour sont des faisceaux non superposés.

5. Dispositif de liaison de retour (500), comprenant un moyen configuré pour réaliser les étapes du procédé selon l'une quelconque des revendications 1 à 4.

6. Support de stockage informatique, dans lequel le support de stockage informatique stocke des instructions, et lorsque les instructions sont exécutées sur un ordinateur associé à un dispositif de liaison de retour, le dispositif de liaison de retour est configuré pour réaliser le procédé selon l'une quelconque des revendications 1 à 4.

7. Programme informatique, dans lequel, lorsque le programme informatique est exécuté sur un ordinateur associé à un dispositif de liaison de retour, le dispositif de liaison de retour est configuré pour réaliser le procédé selon l'une quelconque des revendications 1 à 4.
